# EUROPEAN PATENT APPLICATION

(11) **EP 2 075 998 A1**
(43) Date of publication of application: **01.07.2009**
(21) Application number: 08172492.4
(22) Date of filing: 22.12.2008
(51) Int. Cl.: H04M 1/57, H04M 1/725

(54) **Method and device for displaying caller information**

(30) Priority: 26.12.2007 CN 200710304277
(71) Applicant: Shenzhen Huawei Communication Technologies Co., Ltd., Longgang District Shenzhen Guangdong 518129 (CN)
(72) Inventor: Ding, Yi, 518129, Shenzhen Guangdong (CN)
(74) Representative: Neigenfink, Jan Cornelius

(57) **Abstract**

The present invention discloses a method and device for displaying caller information. The method includes: obtaining caller identification from a received traffic request; searching for the caller information corresponding to the caller identification according to the caller identification; and displaying the caller information in a display format preset by a user. The method and device of the present invention can realize displaying information desired by the user according to the presetting of the user and satisfy the diverse requirement of the user.

## Description

### Field of the Invention

The present invention relates to the field of communication, and in particular to a method and device for displaying caller information.

### Background of the Invention

Currently, when receiving an incoming call, mobile telephone terminals available on the market can display the caller's number as well as the caller's name if it has been already stored in a phonebook of the mobile telephone. Many users, such as businessmen, have many contacts stored in the mobile telephone, thus it may be not possible for them to determine a caller's identity simply by the caller's name. They are more concerned about other information about the caller, such as the information about the caller's company.

In the prior art, the mobile telephone terminals do not allow the user to preset the information about the caller which is displayed when receiving an incoming call, thus they cannot display information desired by the user according to the predefined settings when there is an incoming call or short message, which cannot satisfy the diverse requirements of the users.

### Summary of the Invention

The technical problem that the embodiments of the present invention aim to solve is to display information desired by a user according to the settings preset by the user and satisfy the diverse requirement of the user.

An embodiment of the present invention provides a method for displaying caller information, including:
obtaining caller identification from a received traffic request;
searching for the caller information corresponding to the caller identification according to the caller identification; and
displaying the caller information in a display format preset by a user.

An embodiment of the present invention provides a device for displaying caller information, including:
an obtaining module, configured to obtain a caller identification from a received traffic request;
a searching module, configured to search for caller information corresponding to the caller identification according to the caller identification;
a setting module, configured to provide a display format preset by a user; and
a display module, configured to display the caller information in the display format preset by the user.

The method and device according to the embodiments of the present invention can display information desired by the user according to the settings preset by the user, by searching the caller information corresponding to the caller identification and displaying the caller information in a display format preset by the user, so as to satisfy the diverse requirement of the user.

### Brief Description of the Drawings

Fig. 1 is a flow chart of a method for displaying caller information according to an embodiment of the present invention; and

Fig. 2 is a schematic diagram of a device for displaying caller information according to an embodiment of the present invention.

### Detailed Description of the Embodiments

In the following, the embodiments of the present invention are described in detail with reference to the accompany drawings.

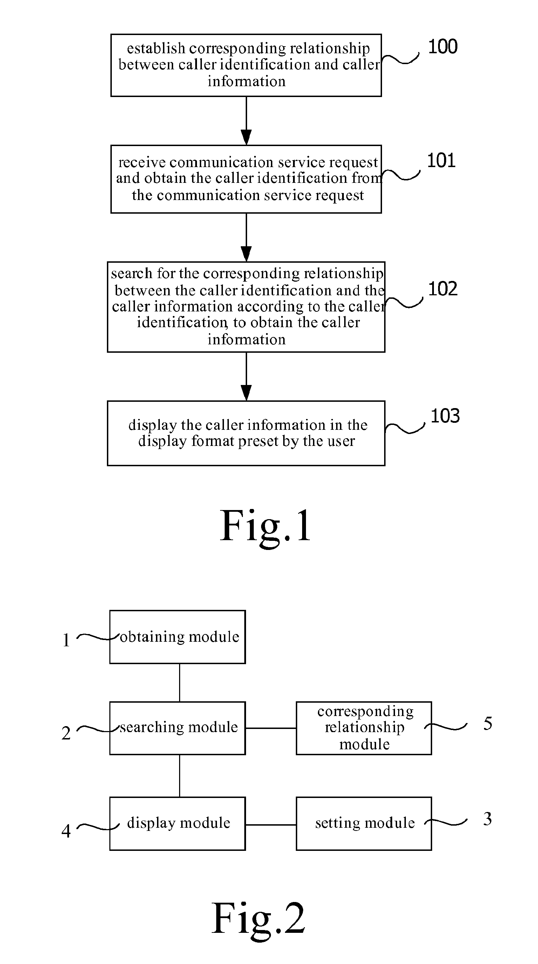

Fig. 1 is a flow chart of a method for displaying caller information according to an embodiment of the present invention. A user presets the display format of the caller information before performing the steps of the embodiment.

The display format includes but is not limited to display items, and display order of the display items.

The display items may conform to a standard format of virtual card (vCard), including personalized information, such as surname, first name, middle name, title, suffix, address, phone number, email address, personal homepage, company, position, role, birthday, personal photo and the like. The address may be more than one address, including home address, office address and correspondence address, and the phone number may be more than one number, including home phone number, mobile phone number and office phone number, etc. Thus, the caller information to be displayed may include nickname, address, mobile phone number, office phone number, home phone number, email address, personal photo, company name, position, personal homepage, role, birthday and any one of combinations thereof.

As for the order for displaying the above display items, the personalized information most concerned by the user may be placed at the front. For example, for a businessman, the information about the company of the caller may be displayed first, so that the identity of the caller can be determined. In this way, the requirement of personalization can be satisfied.

The manners for presetting the display format include:
(1) Uniform manner for presetting the display format, that is, uniformly presetting the display items for information about all contact persons. For example, each of the display items for information about all contact persons stored in the mobile telephone terminal is preset to contain a name of the contact person and a company name;
(2) Group manner for presetting the display format, that is, presetting the display format in groups of the contact persons. For example, information about all contact persons stored in the mobile telephone terminal are divided into group A and group B, each of the display items for information about contact persons of group A are preset to contain a name of the contact person and a company name, and each of the display items for information about contact persons of group B is preset to contain a name and an address of the contact person;
(3) Individual manner for presetting the display format, that is, presetting caller information individually for each contact person. For example, for a caller, display items desired by the user are preset.

The presetting manner of the embodiment may be any combination of the above three manners.

As shown in Fig. 1, the method of the present embodiment includes the following steps:

Step 100: establishing the corresponding relationship between the contact identification and contact information.

Preferably, a corresponding table for indicating the correspondence between the contact identification and the contact information is established. The corresponding table may be a contacts list, in which the corresponding relationship between the contact identification and contact information is stored.

The user may update the contacts list, specifically, the user may input contact identification and contact information, so as to add a contact person in the contacts list. The user may delete the contact identification and contact information, so as to delete a contact person from the contacts list. The user may also modify the contact identification and contact information.

Step 101: receiving a traffic request and obtaining the caller (or contact person) identification from the traffic request. Specifically, the receiving traffic request may be to receive an incoming call (including telephone call and short message).

The caller identification may be International Mobile Subscriber Identification Code (IMSI). In the mobile telephone of the user, a contacts list is preset, and a corresponding relationship between the contact's IMSI and the contact information is established.

Step 102: searching for the corresponding relationship between the caller identification and the caller information according to the caller identification, or searching for the contacts list, to obtain the caller information which is stored in the contacts list of the mobile telephone and corresponds to the caller identification.

Step 103: displaying the caller information according to the display format preset by the user.

The manner for the presetting the display format may be the uniform manner, the group manner or individual manner, as stated above. The display format includes the display items and the display order.

When the uniform manner or the group manner is used and the contact information corresponding to the display items are not defined in the contact information about some contacts, the displayed contents are blanks.

The executing order of Step 100 and Step 101 may be swapped.

According to the present embodiment, the caller information from the user's mobile telephone terminal is obtained by searching the corresponding relationship between the caller identification and caller information, and the caller information is displayed in a preset display format, so that information desired by the user is displayed according to the presetting of the user and the diverse requirement of the user can be satisfied.

Fig. 2 shows a schematic view of a device for displaying caller information according to an embodiment of the present invention. The device includes:
an obtaining module 1, configured to obtain caller identification from the received traffic request;
a searching module 2, configured to search for caller information corresponding to the caller identification according to the caller identification;
a setting module 3, configured to provide the display format preset by the user; and
a display module 4, configured to display the caller information according to the display format preset by the user.

In the embodiment, the user inputs the display format for the caller information through the setting module 3. For example, the user inputs the items of the caller information to be displayed and the display order for each item by the uniform manner, group manner or individual manner, and inputs the caller information corresponding to the display items. The display module 4 displays the caller information according to the input content.

The device of the embodiment may further include a corresponding relationship module 5 configured to establish the corresponding relationship between the caller identification and caller information. The corresponding relationship module 5 may include a contacts list.

In the embodiment, the caller information corresponding to the caller identification is found by the searching module 2, and the caller information is displayed by the display module 4 according to the display format preset by the user, so that the information desired by the user is displayed according to the presetting of the user and the diverse requirement of the user can be satisfied.

It should be noted that the above embodiments just illustrate, rather than limit, the technical solution of the present invention. Though the present invention is described in detail with reference to the above embodiments, those skilled in the art should understand that various modifications and changes may be made to the technical solutions described with reference to the above embodiments without departing from the spirit and scope of the present invention.

## Claims

1. A method for displaying caller information, comprising:
obtaining caller identification from a received traffic request;
searching for the caller information corresponding to the caller identification according to the caller identification; and
displaying the caller information in a display format preset by a user.

2. The method of claim 1, wherein the caller information comprises nickname, address, mobile phone number, office phone number, home phone number, email address, personal photo, company name, position, personal homepage, role, birthday and any of combinations thereof.

3. The method of claim 1, wherein the display format comprises display items and a display order for the display items.

4. The method of claim 1, wherein the display format is preset in a uniform manner, a group manner, an individual manner or any one of combinations thereof.

5. The method of any of claims 1 to 4, wherein the searching for caller information corresponding to the caller identification comprises:
establishing a corresponding relationship between the caller identification and the caller information; and
searching for the caller information corresponding to the caller identification according to the corresponding relationship.

6. The method of claim 5, wherein the caller identification is International Mobile Subscriber Identification Code.

7. A device for displaying caller information, comprising:
an obtaining module, configured to obtain a caller identification from a received traffic request;
a searching module, configured to search for caller information corresponding to the caller identification according to the caller identification;
a setting module, configured to provide a display format preset by a user; and
a display module, configured to display the caller information in the display format preset by the user.

8. The device of claim 7, further comprising a corresponding relationship module, configured to establish a corresponding relationship between the caller identification and the caller information.

9. The device of claim 8, wherein the corresponding relationship module comprises a contacts list.
